# EUROPEAN PATENT APPLICATION

(11) **EP 3 528 143 A1**
(43) Date of publication of application: **21.08.2019**
(21) Application number: 18157302.3
(22) Date of filing: 19.02.2018
(51) Int. Cl.: G06F 17/30

(54) **BOT FOR A SYSTEM**

(71) Applicant: Siemens Aktiengesellschaft, 80333 München (DE)
(72) Inventor: Frank, Johannes, 81673 München (DE); Hofmann, Ingmar Patrick, 90537 Feucht (DE); Hubauer, Thomas, 85748 Garching bei München (DE); Kubo, Florian, 97727 Fuchsstadt (DE); Kumar Karn, Sanjeev, 81379 München (DE); Thon, Ingo, 81541 Muenchen (DE)

(57) **Abstract**

The present invention relates to a bot (1) for a system, wherein the bot (1) comprises an input interface (10), adapted for receiving input data (12), wherein the input data (12) comprises a question at least in part, a responding unit (20), adapted for generating a first response data set (22) based on the question at least in part by matching the question at least in part against at least one pattern, wherein the first response data set (22) comprises at least one element selected from the group, comprising an answer to the question at least in part, a first extended question at least in part to the question at least in part and a first extended question at least in part to the question at least in part with at least one query, a reasoning unit (30), adapted for generating a second response data set (32) based on the first response data set (22) by matching the at least one query of the question at least in part against a semantic description of the system, if the first response data set (22) comprises the first extended question at least in part with at least one query to the question at least in part, wherein the second response data set (32) comprises a second extended question at least in part to the first extended question at least in part with at least one query, otherwise the second response data set (22) comprises the answer to the question at least in part or a first extended question at least in part without at least one query of the first response data set (22), and an output interface (40), adapted for outputting the second response data set (32). Further, the present invention relates to a system, a computer-implemented method and a computer program product.

## Description

### 1. Technical field

The present invention relates to a bot for a system. Further, the present invention relates to a system, a computer-implemented method and a computer program product.

### 2. The prior art

Diverse communication platforms are already known from the prior art. Usually, these communication platforms ensure an efficient data- or information exchange between persons. For example, users or operators participate at a conference by means of a communication platform. Exemplary communication platforms are Live Meeting, Messenger, Salesforce, Slack, WhatsApp, Signal, Telegram and Circuit which provide e.g. communication via voice, messaging, video and screen- or file-sharing. They can be deployed as application software ("App") on distinct devices, including notebooks or Smartphones.

The communication platforms often comprise a bot. The bot can also be referred to as chatbot or virtual assistant. It can be designed as robotic unit, software or any other computer program which is suitable for certain communication tasks.

However, standard bots are solely capable of simply answering questions of users or returning previously asked questions in the past by users. These solutions do not consider any context related information. For instance, if a conveyor belt stops, questions concerning units centered nearby the conveyor belt are more likely to be relevant for the user than questions concerning other components. This context related information of the units is neglected according to prior art. It is therefore the objective technical problem underlying the present invention to provide a bot for a system which generates more reliable responses to a user's question in an efficient manner.

### 3. Summary of the invention

This problem is according to one aspect of the invention solved by a bot for a system, wherein the bot comprises:
a. an input interface, adapted for receiving input data, wherein
b. the input data comprises a question at least in part,
c. a responding unit, adapted for generating a first response data set based on the question at least in part by matching the question at least in part against at least one pattern, wherein
   the first response data set comprises at least one element selected from the group, comprising
   an answer to the question at least in part, a first extended question at least in part to the question at least in part and a first extended question at least in part to the question at least in part with at least one query,
d. a reasoning unit, adapted for generating a second response data set based on the first response data set by matching the at least one query of the question at least in part against a semantic description of the system,
   if the first response data set comprises the first extended question at least in part with at least one query to the question at least in part, wherein
   the second response data set comprises a second extended question at least in part to the first extended question at least in part with at least one query,
   otherwise the second response data set comprises the answer to the question at least in part or a first extended question at least in part without at least one query of the first response data set, and
e. an output interface, adapted for outputting the second response data set.

Accordingly, the invention is directed to a bot in a system. In other words, the bot is part of the system, such as e.g. an automation system. The automation system can also be referred to as industrial plant or industrial facility. The automation system might comprise one or more further components, such as industrial controller, sensors and actuators.

In one example, a group of employees attend a conference via circuit and exchange information with regard to the automation system or a unit of the automation system. One employee might have discovered abnormal values of a sensor and assumes a malfunction of the sensor, such as temperature sensor. The bot provides assistance in this exemplary case, such as a reason or measure to correct the malfunction.

The bot receives input data with a question at least in part by a user. The user can be the aforementioned conference participant. Moreover, the input data can comprise additional information, such as the semantic description. The semantic description is a semantic model, wherein the semantic can be modeled as facts.

The question at least in part can be defined as a question which is partially or completely formulated by the user. Accordingly, sub-questions are possible. Exemplary questions are basic W questions, such as What Why How. The sentences or terms of a question of the user are available in natural language.

For example, the semantic description contains knowledge about how the components of a plant or machine interact with each other, e.g. that a motor turns off, if a bit at a specific address is set to zero, that a bit is set to zero, if a temperature measurement exceeds a certain threshold or that a pump is connected to a pipe which in turn is connected to a tank.

The bot comprises a responding unit and a reasoning unit. The responding unit takes the question at least in part as input and generates a first response data set as output by pattern matching. The first response data set comprises an answer to the question at least in part and/or a first extended question at least in part. The first extended question is related to the input question at least in part in the manner that the input question at least in part is extended. The first extended question can comprise one or more queries. Alternatively, the first extended question does not comprise one or more queries. The query is e.g. a search query or query string.

The reasoning unit takes the first response data set as input and generates a second response data set as output depending on the pre-defined elements of the first response data set and the availability of a query. For example, the user can specify the input for the reasoning unit by selecting an answer or a question with or without a query.

In the case that the first response data set comprises a query, the reasoning unit matches the query of the question at least in part against a semantic description. In the other case, the first response data set is equal to the second response data set. Thus, no matching has to be performed by the reasoning unit. The step of matching is skipped.

One advantage of present invention is that the bot allows for an efficient communication between machine and user as well as between users in the automation system. The bot supports the user by responding to his questions or problems in an efficient and user-friendly manner. Consequently, problems can be solved faster compared to prior art and the user is capable to react also more quickly. This improved support by the bot results in reduced downtimes or even prevents downtimes of the automation system from the very beginning.

It will be appreciated that the bot is suitable for any automation system. The bot has to be implemented just once and can be reused across any automation system by simply adapting or exchanging the semantic description. This way, the bot can be easily and efficiently implemented, adapted and deployed. These advantageous improvements are reflected in considerable overall time and cost savings.

In one aspect of the present invention, the question at least in part of the input data is provided by the bot or is entered by a user using entering means. Accordingly, the user can select the question from a data source, such as a list provided by the bot or can enter free text. This way, the question can be flexibly entered in an efficient manner.

In another aspect of the present invention, the entering means is designed as keyboard, touch screen or microphone. Accordingly, the user can enter the question in any kind of format via several distinct entering means. For example, a question can be entered in text format via a keyboard by the user. This way, the user data can be flexibly entered and be further processed by the bot in an efficient manner.

In another aspect of the present invention, the semantic description represents a structure of the system. Accordingly, the system is described in terms of the semantic structure. Particularly, the semantics is modeled. For example the expression "measures (sensor, temperature)" stands for sensor measures temperature. In other words, a sensor of the automation system is assigned to the aforementioned exemplary expression. The semantic description can be advantageously adapted, such as restricted or extended, depending on the automation system or the user's demand, as described further above.

In another aspect of the present invention, the semantic description comprises a control program. Accordingly, the semantic description comprises additionally a control program or control logic, which can be accessed by the reasoning unit or other components of the automation system. This way, distinct tasks can be performed automatically in an efficient manner.

In another aspect of the present invention, the reasoning unit is further adapted to assign probabilistic values to each element of the second response data set.

In another aspect of the present invention, the output interface is adapted to output the elements of the second response data set depending on the assigned probabilistic values.

Accordingly, the second response data set can be extended with probabilistic information, in particular binary or float values between zero and one. This allows for reordering and/or ranking the answers and questions of the second response data set in accordance with the probabilistic information. Referring to the example, the answers related to the aforementioned temperature sensor with abnormal values are ranked higher or have higher priority than other answers. Thus, these answers will be outputted first or as first entries in a list of answers. Further, these answers can be displayed and visually indicated to the user. This way, the user is supported by selecting the most important and reliable answer to his question and can correct the malfunction of the automation system more quickly.

A further aspect of the invention is a system comprising the aforementioned bot.

A further aspect of the invention is a computer-implemented method for a bot, comprising the steps of:
a. receiving input data (12) by an input interface (10), wherein
b. the input data (12) comprises a question at least in part,
c. generating a first response data set (22) based on the question at least in part by matching the question at least in part against at least one pattern by a responding unit (20), wherein
   the first response data set (22) comprises at least one element selected from the group, comprising
   an answer to the question at least in part, a first extended question at least in part to the question at least in part and a first extended question at least in part to the question at least in part with at least one query,
d. generating a second response data set (32) based on the first response data set (22) by matching the at least one query of the question at least in part against a semantic description of the system by a reasoning unit (30),
   if the first response data set (22) comprises the first extended question at least in part with at least one query to the question at least in part, wherein
   the second response data set (32) comprises a second extended question at least in part to the first extended question at least in part with at least one query,
   otherwise the second response data set (22) comprises the answer to the question at least in part or a first extended question at least in part without at least one query of the first response data set (22), and
e. outputting the second response data set (32) by an output interface (40).

A further aspect of the invention is a computer program (product) directly loadable into the internal memory of a computer, comprising software code portions for performing the steps of the above-mentioned method when said computer program (product) is running on a computer or on one of the above mentioned apparatus.

### 4. Short description of the drawings

In the following detailed description, presently preferred embodiments of the invention are further described with reference to the following figures:
- Fig. 1: shows a bot in accordance with the invention.
- Fig. 2: shows a flow chart of the method in accordance with invention.

### 5. Detailed description of preferred embodiments

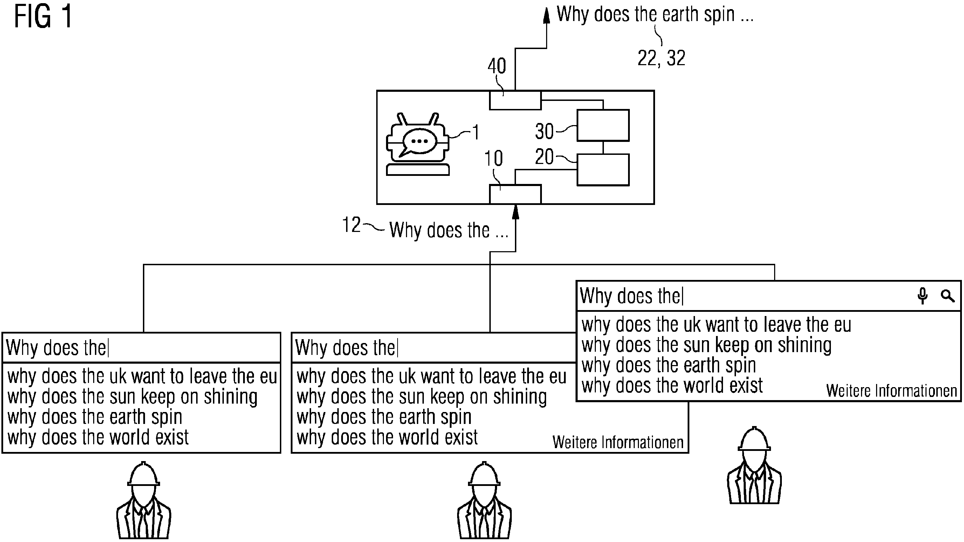

Figure 1 illustrates a bot 1 in a communication platform for an automation system. The communication platform can be designed as any common communication platform, such as the platforms listed further above. The communication platform provides an efficient data exchange between two or more persons e.g. employees of a company. Referring to the exemplary sensor above, the employees might exchange related data concerning a malfunction or failure of the sensor. The data exchange can be established via mail, telephone or other communication forms.

The bot 1 comprises in particular two units, the responding unit 20 for generating a first response data set 22 as output based on question at least in part as input by matching the question at least in part, such as partial or complete question, against at least one pattern and a reasoning unit 30 for generating a second response data set 32 as output based on the first response data set 22 as input by matching at least one query against a semantic description of the automation system, if the first response data set 22 comprises a query. The input data 12 can be received via one or more input interfaces 10. The output data 22, 32 in form of the second response data set 32 can be outputted via one or more output interfaces 40, including transmitting the output.

The two units 20, 30 and the according data sets are explained in the following in more detail.

The semantic description can be defined in terms of standardized data and knowledge models. The standardized models are advantageous in view of the integration into the generic bot 1. The semantic description represents the structure of the autonomous system. In the example below, the semantic description is modeled in DataLog/Prolog:

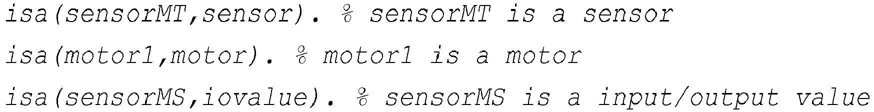

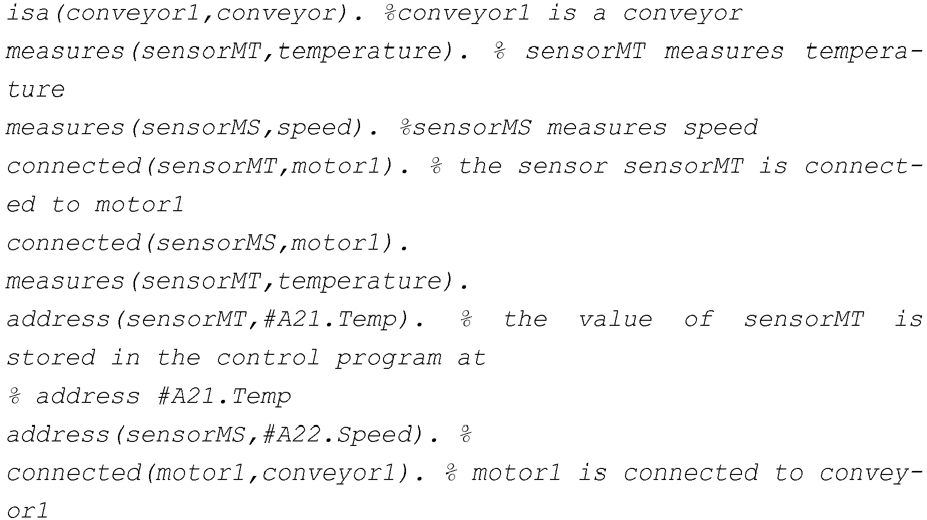

Further, the semantic description can comprise a control program which can establish the connection of the semantic elements and enable the reasoning unit 30 or other units to trace through the control logic, e.g. as follows:

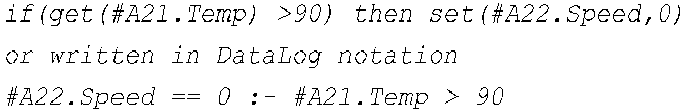

### The responding unit

The responding unit 20 can also be referred to as Question/Answer generating unit. The responding unit 20 takes the question of a user as input 12 and generates a first response data set 22 as output using pattern matching.

The first response data set 22 comprises different kinds of replies or responses, including answers to user's questions and follow up questions, also referred to as first extended questions.

The responding unit 20 can be implemented in AIML, as follows.

According to this, the user data set of the input data 12 is matched against a pattern, e.g. a slightly artificial example *What is the value of **. If a pattern is matched, the corresponding response data set 22 is assigned to the user, e.g. *The value of <star*/*> is 5, where the <star*/*>* in the template is replaced *by ** in the input.

This can be expressed in AIMLs XML notation as

```
 <category>
 <pattern>WHAT IS THE VALUE OF *</pattern>
 <template>
 The value of <star/> is 5.
 </template>
 </category>
```

The AIML expression can be adapted by the following two extensions.

The first extension is a primitive for question generation. If the template contains one or more sentences preceded by an upside down question, the sentences will be marked and suggested as questions to the user. This can be expressed in AIMLs XML notation as

```
 <category>
 <pattern>WHAT IS THE [blank]</pattern>
 <template>
 ¿What is the value of [blank]? ¿What is the speed of [blank]?
 </template>
 </category>
```

In this exemplary case the bot 1 suggests two possible extensions of the current question to the user. The first option is *What is the value of [blank]?* The second option is *What is the speed of [blank]?*

The second extension is the generation of calls to the reasoning unit 30 using the semantic description. The reasoning unit 30 can also be referred to as probabilistic logic reasoner. A new AIML tag reason can be used as semantic element which triggers the reasoning unit 30 and instantiates a template with the answers given by the reasoning unit 30, e.g. The question *What is the value of [blank]* triggers the following template:

```
 <category>
 <pattern>WHAT IS THE VALUE OF [blank]</pattern>
 <template>
 <reason>
 <li name="template"> ¿What is the value of <get
 name="MEASUREMENT"/> of [blank]</li>
 <li name="query">measures(_,MEASUREMENT).</li>
 </reason>
 </template>
 </category>
```

The reasoning unit 30 is triggered and if it has two instances of MEASUREMENT it generates two potential questions to choose from. One question is generated per possible value of MEASUREMENT. It has to be noted that this feature can not only be used for generating new questions but also to generate lists and enumerations in answers. In the template it is possible to refer to the grounding of variables using the element <get name="VARIABLENAME"/>. Grounding refers to replacing variables, written with a leading upper case character or underscore e.g., MEASUREMENT or _ by terms written with leading lowercase characters, e.g., speed s.t. the resulting element appears in the semantic description. For example _ by sensorMS and MEASUREMENT by speed, s.t., measures(sensorMS,speed) is matched. In addition there is a special variable called PROBABILITY which is instantiated for each such grounding.

### The reasoning unit

The reasoning unit 30 is called or triggered by the responding unit 20 and utilizes the semantic description to reason about the automation system. In more detail, the reasoning unit 30 augments the given semantic description automatically with a set of clauses to derive new information from the information given. The reasoning unit 30 can insert values for all variables (indicated by upper case characters) for the following exemplary clause

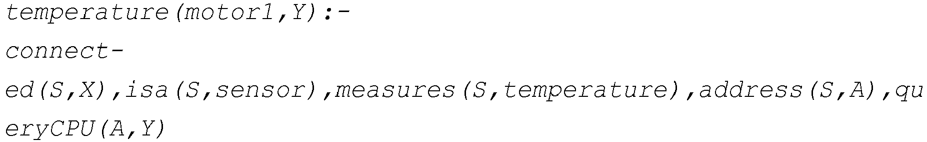

This clause derives the temperature of *motor1* by looking for an S which is connected to *X,* the *S* needs to be a *sensor, S* needs to measure the *temperature,* the address of *S* is *A*.

This results in a first extension queryCPU(Address,Value). The resulting extension allows the semantic reasoning unit 30 to query the CPU of the control system for the current value stored at the given address.

The second extension can be probabilistic information. The probabilistic information indicates the current probability that a clause is true. The probability is indicated by a float value between 0 and 1 or a variable preceding the clause separated by a colon. If the probability is a variable, this needs to be instantiated with a float value between zero and one in the clause body, e.g.,

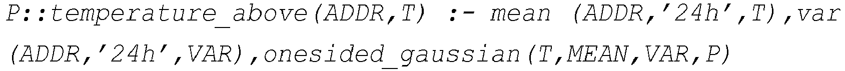

Indicating the probability the temperature of X will exceed the threshold T, where the temperature profile is modeled by a Gaussian distribution with its mean as specified by the predicate mean and its variance as specified by the predicate var.

To be able to execute the previous query the mean and variance of the values measured can be determined. For this purpose our system includes the two predicates mean and var. The values for the mean and variance are calculated using the history of our system. To populate the values of the history our system collects values from the specified addresses at regular, configurable intervals.

Based on this pre-collected values the system calculates the mean and variance on the fly for a pre-specified time interval, e.g., mean (#A21.Temp,,'24h',T), calculates the mean of the temperature for the last 24 hours based on the data from the address #A21.Temp.

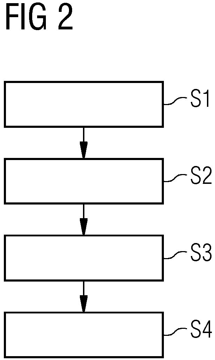

Figure 2 shows a flow chart of the method in accordance with invention. The method comprises the steps of receiving input data S1, generating a first response data set S2, generating a second response data set S3, outputting the second response data set S4, as outlined further above in detail.

## Claims

1. Bot (1) for a system, wherein the bot (1) comprises:
a. an input interface (10), adapted for receiving input data (12), wherein
b. the input data (12) comprises a question at least in part,
c. a responding unit (20), adapted for generating a first response data set (22) based on the question at least in part by matching the question at least in part against at least one pattern, wherein
the first response data set (22) comprises at least one element selected from the group, comprising
an answer to the question at least in part, a first extended question at least in part to the question at least in part and a first extended question at least in part to the question at least in part with at least one query,
d. a reasoning unit (30), adapted for generating a second response data set (32) based on the first response data set (22) by matching the at least one query of the question at least in part against a semantic description of the system,
if the first response data set (22) comprises the first extended question at least in part with at least one query to the question at least in part, wherein
the second response data set (32) comprises a second extended question at least in part to the first extended question at least in part with at least one query,
otherwise the second response data set (32) comprises the answer to the question at least in part or a first extended question at least in part without at least one query of the first response data set (22), and
e. an output interface (40), adapted for outputting the second response data set (32).

2. Bot (1) according to claim 1, wherein the question at least in part of the input data (12) is provided by the bot (1) or is entered by a user using entering means.

3. Bot (1) according to claim 2, wherein the entering means is designed as keyboard, touch screen or microphone.

4. Bot (1) according to any of the preceding claims, wherein the semantic description represents a structure of the system.

5. Bot (1) according to claim 4, wherein the semantic description comprises a control program.

6. Bot (1) according to any of the preceding claims, wherein the reasoning unit (30) is further adapted to assign probabilistic values to each element of the second response data set (32).

7. Bot (1) according to any of the preceding claims, wherein the output interface (40) is adapted to output the elements of the second response data set (32) depending on the assigned probabilistic values.

8. System comprising a bot (1) according to any of the preceding claims.

9. Computer-implemented method for a bot, comprising the steps of:
a. receiving input data (12) by an input interface (10), wherein
b. the input data (12) comprises a question at least in part,
c. generating a first response data set (22) based on the question at least in part by matching the question at least in part against at least one pattern by a responding unit (20), wherein
the first response data set (22) comprises at least one element selected from the group, comprising an answer to the question at least in part, a first extended question at least in part to the question at least in part and a first extended question at least in part to the question at least in part with at least one query,
d. generating a second response data set (32) based on the first response data set (22) by matching the at least one query of the question at least in part against a semantic description of the system by a reasoning unit (30),
if the first response data set (22) comprises the first extended question at least in part with at least one query to the question at least in part, wherein
the second response data set (32) comprises a second extended question at least in part to the first extended question at least in part with at least one query,
otherwise the second response data set (32) comprises the answer to the question at least in part or a first extended question at least in part without at least one query of the first response data set (22), and
e. outputting the second response data set (32) by an output interface (40).

10. A computer program product directly loadable into internal memory of a computer, comprising software code portions for performing the steps according to claim 9 when said computer program product is running on a computer.
